# EUROPEAN PATENT APPLICATION

(11) **EP 1 770 997 A2**
(43) Date of publication of application: **04.04.2007**
(21) Application number: 06291505.3
(22) Date of filing: 25.09.2006
(51) Int. Cl.: H04N 5/445

(54) **Broadcasting system for providing program information and method thereof**

(30) Priority: 26.09.2005 US 719972 P
(71) Applicant: LG Electronics Inc., Yongdungpo-gu Seoul (KR)
(72) Inventor: Byun, Seong Chan, Seocho-gu, Seoul (KR); Lee, Hyun Bae, Dongan-gu, Anyang-si, Gyeongi-do (KR); Kwak, Min Sung, Gangnam-gu, Seoul (KR)
(74) Representative: Loisel, Bertrand

(57) **Abstract**

The invention relates to a digital multimedia broadcasting system, and more specifically, to a method for displaying electronic program guide. A broadcasting system for providing program information comprises a sender having an EPG data generating unit for generating an EPG data having cast and director information of the program, an encoding unit for encoding the EPG data and a sending unit for sending the encoded EPG data, and a receiver having a receiving unit for sending the encoded EPG data transferred from the sender, a decoding unit for decoding the encoded EPG data received from the receiving unit and a EPG data processing unit for extraction of the cast and director information from the decoded EPG data.

## Description

### BACKGROUND OF THE INVENTION

### Field of the Invention

The present invention relates to a digital multimedia broadcasting system, and more specifically, to a broadcasting system for providing program information.

### BACKGROUND OF THE INVENTION

The conventional arts such as radio and television systems are now being replaced by the digital systems. Digital television systems have been used in Korea since 2001.

On the other hand, Digital Audio Broadcasting (hereinafter 'DAB') is currently used only for broadcasting audio such as radio broadcasting. However, Digital Multimedia Broadcasting (hereinafter 'DMB') has been developed, and Korea is trying to utilize the DMB for broadcasting digital radio, television, and etc.

The biggest advantage of DMB is to provide a digital multimedia service not only for those users who are staying at a fixed location but also for those users who are in a moving transportation such as automobiles and trains. Conventionally, a digital multimedia service may only be used for the users who are at a fixed location. DMB provides a digital multimedia system that user can move around while watching the broadcasting program. Here, it is effective that DMB is portable and convenient. Thus, the users are not restricted to a fixed location while using the digital multimedia system.

Unlike the other digital broadcasting system, it is effective that DMB provides data transfer. Conventionally, a digital broadcasting system generally only provides audio and video service. However, DMB provides not only audio and video service but also data transfer service. Thus, DMB complements conventional digital broadcasting system.

On the other hand, the conventional art such as Electronic Program Guide (hereinafter 'EPG') should be reorganized according to DMB standard. Thus, an appropriate standard of EPG for DMB is still debatable.

In DMB system, the EPG should be created so that it is compatible to various receiver having different capacity, source and return channel capacity. EPG data comprises service information having Ensemble and service information, and a program information having service information, schedule, program, group and event information.

### SUMMARY OF THE PRESENT INVENTION

The present invention provides such a method for providing program information.

An object of the present invention is to provide a broadcasting system for providing program information comprising a sender having an EPG data generating unit for generating an EPG data having cast and director information of the program, an encoding unit for encoding the EPG data and a sending unit for sending the encoded EPG data, and a receiver having a receiving unit for sending the encoded EPG data transferred from the sender, a decoding unit for decoding the encoded EPG data received from the receiving unit and a EPG data processing unit for extraction of the cast and director information from the decoded EPG data.

The present invention also provides a broadcasting system for providing program information, wherein the EPG data providing cast and director information of the program is represented as an extensible markup language (XML) schema.

Another object of the present invention is to provide a broadcasting system for providing program information, wherein the EPG data is represented as XML, a <CastMember> is described in the element, and a <CastMemberType> and a <CastMemberName> are described in the attribute. The program information comprises a cast, director, live, pre-recorded, present and re-broadcasting program information.

Further features of the invention, its nature and various advantages will be more apparent from the accompanying drawings and the following detailed description of the preferred embodiment.

### BRIEF DESCRIPTION OF THE DRAWINGS

Fig. **1** is a block diagram illustrating a structure of a broadcasting system for providing program information.

Fig. **2** shows a display screen of broadcasting system in accordance with the present invention.

Fig. **3** shows a display screen for showing EPG menu in accordance with the present invention.

Fig. **4** shows a program listings list in accordance with the first embodiment of present invention.

Fig. **5** shows an example of a detail of a selected broadcasting program.

Fig. **6** shows a program listings grid in accordance with the second embodiment of present invention.

Fig. **7** shows a program listings grid in accordance with the third embodiment of present invention.

Fig. **8** illustrates a broadcasting system providing program information

Fig. **9** is an example of XML schema representing program information of a broadcasting system of the present invention.

Fig. **10** is an example of XML schema representing program information of a broadcasting system of the present invention.

Fig. **11** is an example of XML schema representing program information of a broadcasting system of the present invention.

### DETAILED DESCRIPTION OF THE INVENTION

An object of the present invention is to provide a broadcasting system for providing program information comprising a sender having an EPG data generating unit for generating an EPG data having cast and director information of the program, an encoding unit for encoding the EPG data and a sending unit for sending the encoded EPG data, and a receiver having a receiving unit for sending the encoded EPG data transferred from the sender, a decoding unit for decoding the encoded EPG data received from the receiving unit and a EPG data processing unit for extraction of the cast and director information from the decoded EPG data.

The definition of EPG for digital television system is very complex, and heavy data transferring from a sender to a receiver is necessary. However, in order to send the data to a portable receiver such as a DMB mobile phone, heavy data transferring should be avoided. It is effective that the EPG definition for DMB system provides a simpler and smaller data transfer. Thus, the present invention is to provide the EPG standard for DMB system.

Another object of the present invention is to provide a broadcasting system for providing program information, wherein the EPG data providing cast and director information is represented as an extensible markup language (XML) schema.

Another object of the present invention is to provide a broadcasting system for providing program information, wherein the EPG data is represented as XML, a <CastMember> is described in the element, and a <CastMemberType> and a <CastMemberName> are described in the attribute.

In order to achieve the above-described object, a broadcasting method for sending program information comprising a step of generating of an EPG data having cast and director information, a step of encoding the EPG data and a step of sending the encoded EPG data is provided.

In the broadcasting method for sending program information, the EPG data providing cast and director information is represented as an extensible markup language (XML) schema.

In the broadcasting method for sending program information, the EPG data is represented as XML, a <CastMember> is described in an element, and a <CastMemberType> and a <CastMemberName> are described in an attribute.

In order to achieve the above-described object, the broadcasting method for receiving program information comprising a step of receiving an encoded EPG data having cast and director information, a step of decoding the encoded EPG data and a step of extracting cast and director information from the decoded EPG data is provided.

In the broadcasting method for receiving program information, the EPG data providing cast and director information is represented as an extensible markup language (XML) schema.

In the broadcasting method for receiving program information, the EPG data is represented as XML, a <CastMember> is described in the element, and a <CastMemberType> and a <CastMemberName> are described in the attribute.

The object of the present invention is to provide a broadcasting apparatus for sending program information comprising a step of receiving an encoded EPG data having cast and director information, a step of decoding the EPG data and a step of extracting cast and director information from the decoded EPG data.

Another object of the present invention is to provide the broadcasting apparatus for sending program information, wherein the EPG data providing cast and director information is represented as an extensible markup language (XML) schema.

In the broadcasting apparatus for sending program information, the EPG data is represented as XML, a <CastMember> is described in the element, and a <CastMemberType> and a <CastMemberName> are described in the attribute.

In order to achieve the above-described object, a broadcasting apparatus for receiving program information comprising a step of receiving an encoded EPG data having cast and director information, a step of decoding the EPG data, and a step of extracting cast and director information from the decoded EPG data.

In the broadcasting apparatus for receiving program information, the EPG data providing cast and director information is represented as an extensible markup language (XML) schema.

In the broadcasting apparatus for receiving program information, the EPG data is represented as XML, a <CastMember> is described in the element, and a <CastMemberType> and a <CastMemberName> are described in the attribute.

It is effective that the broadcasting apparatus and system can provide cast and director information to the user.

In other embodiments, a broadcasting system for providing program information comprises a sender having an EPG data generating unit for generating an EPG data having a live and pre-recorded information, an encoding unit for encoding the EPG data and a sending unit for sending the encoded EPG data, and a receiver having a receiving unit for sending the encoded EPG data transferred from the sender, a decoding unit for decoding the encoded EPG data received from the receiving unit and a EPG data processing unit for extracting a live and pre-recorded information from the decoded EPG data.

In the broadcasting system for providing program information, the EPG data providing live and pre-recorded broadcasting program information is represented as an extensible markup language (XML) schema. In the broadcasting system for providing program information, an attribute of a <dmbProgramme> represents live and pre-recorded information. The attribute is described as <liveType>. If the <liveType> of the attribute is determined to be 'yes', then the program is a live broadcasting program. On the other hand, the <liveType> of the attribute is determined to be 'no', then the program is a pre-recorded broadcasting program.

Furthermore, the receiver is a digital multimedia broadcasting (DMB) mobile phone and the sender is a digital multimedia broadcasting (DMB) facility.

The broadcasting method for sending program information comprises generating an EPG data having live and pre-recorded information, encoding the EPG data, and sending the encoded EPG data. The EPG data describing live and pre-recorded information is represented as an extensible markup language (XML) schema.

An attribute of a <dmbProgramme> represents live and pre-recorded information. The attribute is described as <liveType>. If the <liveType> of the attribute is determined to be 'yes', then the program is a live broadcasting program. On the other hand, the <liveType> of the attribute is determined to be 'no', then the program is a pre-recorded broadcasting program.

In other embodiments, a broadcasting system for providing program information comprises a sender having an EPG data generating unit for generating an EPG data having a present broadcasting and re-broadcasting information, an encoding unit for encoding the EPG data and a sending unit for sending the encoded EPG data, and a receiver having a receiving unit for sending the encoded EPG data transferred from the sender, a decoding unit for decoding the encoded EPG data received from the receiving unit and a EPG data processing unit for extracting a present broadcasting and re-broadcasting information from the decoded EPG data.

The EPG data providing a present broadcasting and re-broadcasting information is represented as an extensible markup language (XML) schema.

An attribute of a <dmbProgramme> represents a present broadcasting and re-broadcasting information. The attribute is described as <repeatType>. If the <repeatType> of the attribute is determined to be 'yes', then the program is a re-broadcasting program. On the other hand, the <repeatType> of the attribute is determined to be 'no', then the program is a present broadcasting program.

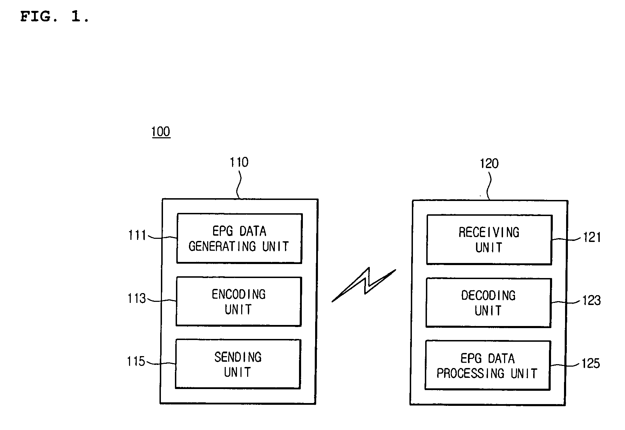

Fig. **1** is a block diagram illustrating a structure of a broadcasting system for providing program information.

Fig. **1** shows a broadcasting system **100** for a digital multimedia system.

System **100** includes a sender **110** for sending program information and a receiver **120** for receiving program information.

The sender **110** for sending program information comprises an EPG generating unit **111,** an encoding unit **113** and a sending unit **115.** The receiver **120** for receiving program information comprises a receiving unit **121,** a decoding unit **123** and an EPG data processing unit **125.**

The EPG data generating unit **111** generates EPG data having a title, channel information, date, time, genre, cast members and broadcasting type. The broadcasting type may comprise various broadcasting types such as live, pre-recorded, present and re-broadcasting. However, the EPG data generating unit is not limited to the above-described elements.

The encoding unit **113** encodes the EPG data generated from the EPG generating unit 111. The encoding unit 113 also encodes not only EPG data but also audio signal and video signal.

The sender **115** sends the encoded EPG data encoded in the encoding unit **113.** Here, the sender **115** sends a signal, which is a wireless standard to the receiver **120.**

The receiver **121** receives the encoded EPG data being sent from the sending unit **115.** The decoding unit **123** decodes the encoded EPG data received in the receiving unit **121.**

The EPG data processing unit **125** extracts cast and director information from the decoded EPG data having channel information, date, time, genre, cast members and broadcasting type. The broadcasting type represents broadcasting types such as live, pre-recorded, current and re-broadcasting. The decoded EPG data is decoded in the decoding unit **123.**

As described-above, the extracted EPG data may be displayed on the display screen of the receiver **120** for receiving program information. The sender **110** for sending program information may be a television distribution facility such as the DMB station, and the television distribution facility may be a facility for sending DMB signal. The receiver **120** for receiving program information may be an user television equipment such as mobile phone, and the television equipment may be an equipment for receiving DMB signal

Accordingly, Receiver **120** will be further described below.

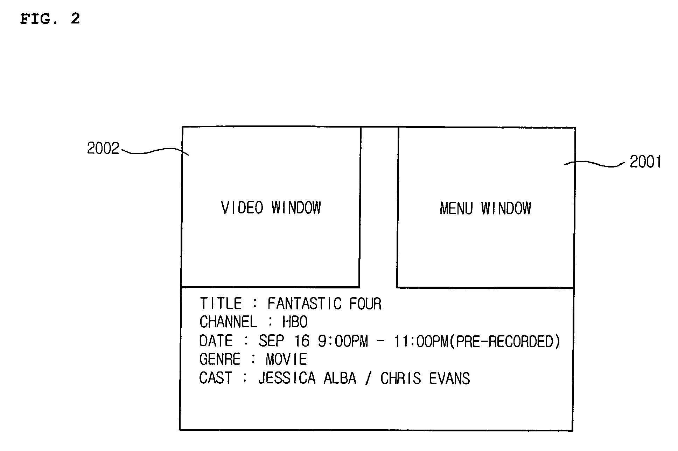

Fig. **2** is illustrative display screen of a broadcasting system in accordance with the present invention.

In Fig. **2,** the video is displayed on the video window 2002, and the menu window comprises various menus such as a basic television listing, current television listing, search program and my favorite.

As shown in Fig. **2,** the user may use a DMB mobile phone to view DMB programs. If the user presses an EPG button while the user is watching the program, then the EPG information is displayed on the bottom of the screen. The EPG information may comprise a title, channel, date, genre and cast information of the program.

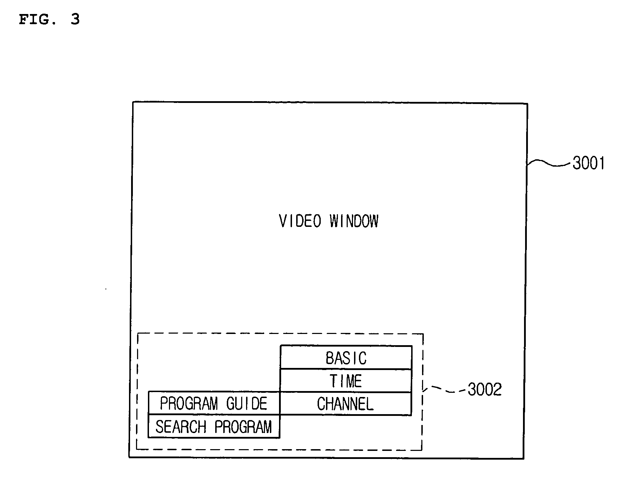

The EPG information may be displayed in various ways as illustrated in Fig. **3 -** Fig. **7.**

Fig. **3** is an illustrative display screen for showing EPG menu in accordance with the present invention. Video window 3001 for displaying video and EPG menu **3002** is provided. The user may select a program having various menus such as basic, time and channel. The EPG information will be displayed based on the menu selected by the user. As shown in Fig. **3,** the present invention provides a broadcasting system for allowing user to select an EPG menu preferably

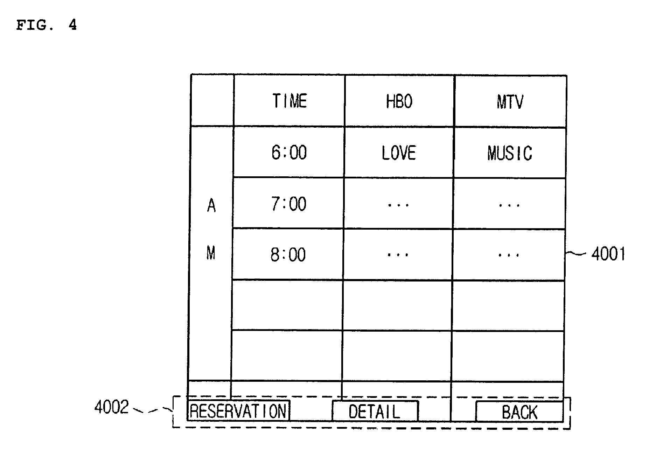

As shown in EPG menu **3002,** if the user selects a basic menu and the program listings list will be displayed on a screen as shown in Fig. **4.** Fig. **4** is an illustrative program listings list in accordance with the first embodiment of present invention.

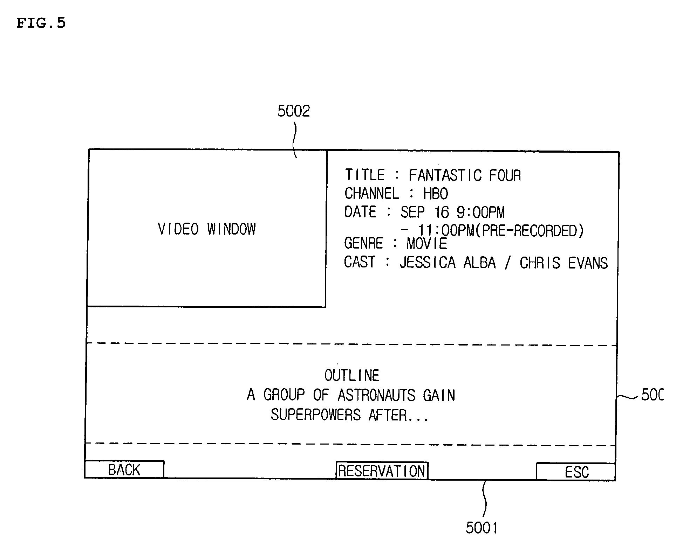

In Fig. **4,** program listings grid **4001** is displayed on a screen. If the user selects detail button in box **4002,** the detail information of the selected program will be displayed on a screen as shown in Fig. **5.**

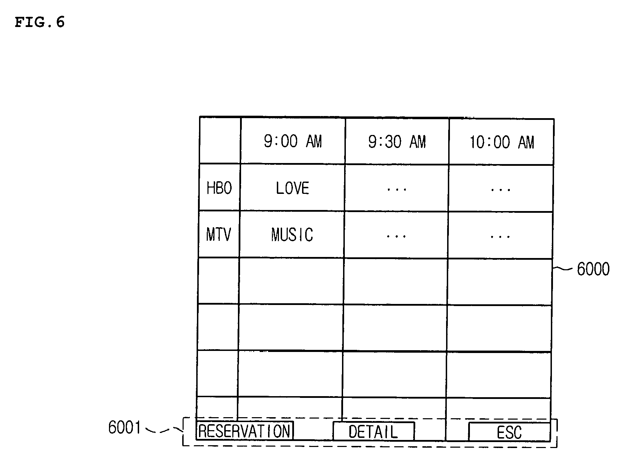

Fig. **6** is an illustrative program listings grid in accordance with the second embodiment of present invention. As shown in Fig. **3,** if the user selects time menu in box **3002,** a program listings grid will be displayed on a screen as shown in Fig. **6.** As shown in Fig. **6,** the program listings grid will be organized by time order of programs. On the other hand, the user may select detail menu in box **3002,** detail information of the selected program will be displayed on a screen as shown in Fig. **5.**

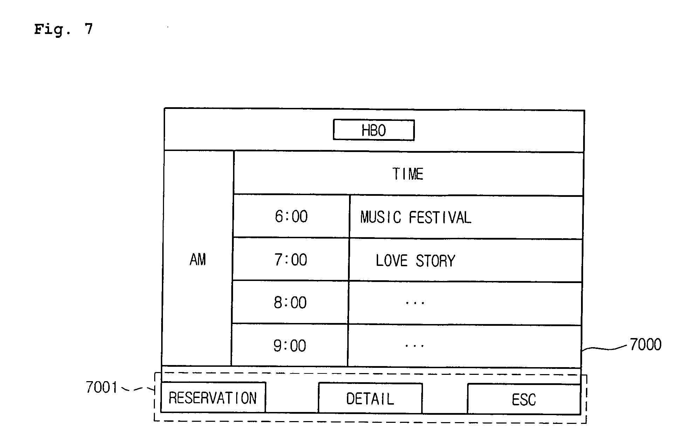

Fig. **7** is an illustrative program listings grid in accordance with the third embodiment of present invention.

In Fig. **3,** if the user selects channel menu, program listings grid as shown in Fig. **7** will be displayed on a screen. The user may select detail menu in box **3002,** detail information of the selected program will be displayed on a screen as shown in Fig. **5.**

In order to display EPG information as described above, the EPG data service should be defined as a standard between a sender **110** for generating and sending EPG data, and a receiver **120** for receiving and extracting EPG data.

For example, a standard of the EPG data service, a method for providing cast and director information will be described below.

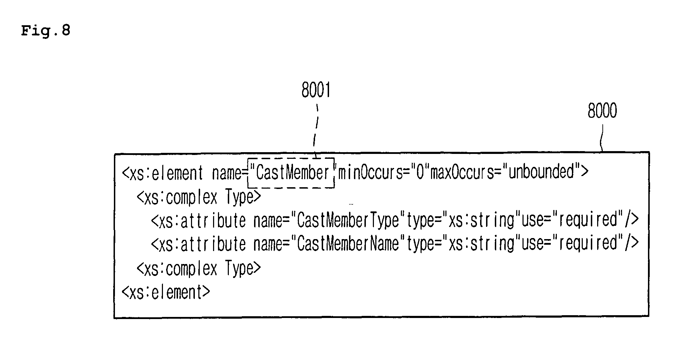

Fig. **8** illustrates a broadcasting system providing cast and director information, which is represented as an extensible markup language (XML) schema in accordance with the present invention.

The EPG data providing cast and director information is represented as an extensible markup language (XML) schema.

The EPG data providing cast and director information is represented as XML, a <CastMember> is described in the element, and a <CastMemberType> and a <CastMemberName> are described in the attribute.

Here, the <CastMember> of the element is represented to include 0 to infinite number. Specifically, the television distribution facility may decide not to provide cast and director information. If the facility decides to describe cast and director information, then the number of cast and director members can be infinite.

The <CastMember> of the attribute represents cast and director information. The <CastMember> of the attribute represents a director, an assistant director, cast member, special effect member and make-up member. Here, the <CastMember> of the attribute is represented as a string type.

The <CastMember> of the attribute provides the name of cast members. The <CastMemberName> of the attribute is represented as a string type.

On the other hand, the <CastMember> of the element is included in a complex type, which is a <dmbProgrammeType> of XML schema representing the EPG data.

The broadcasting system for providing program information is not limited to providing cast and director information.

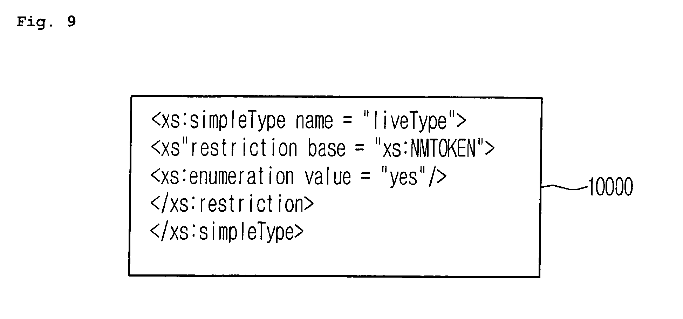

Fig. **9** is an example of XML schema representing program information of a broadcasting system of the present invention. The program information may comprise live and pre-recorded broadcasting program information.

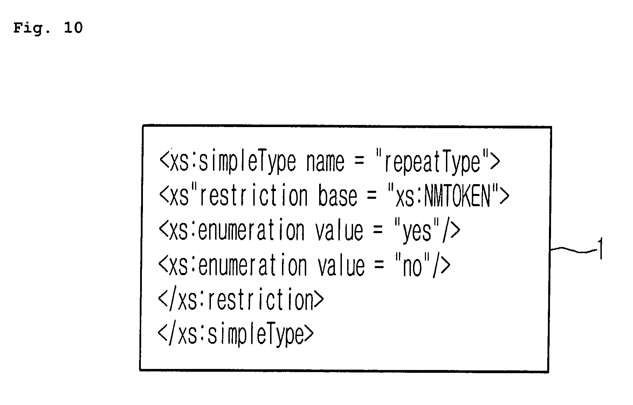

Fig. **10** is an example of XML schema representing program information of a broadcasting system of the present invention. The program information may comprise present and re-broadcasting program information.

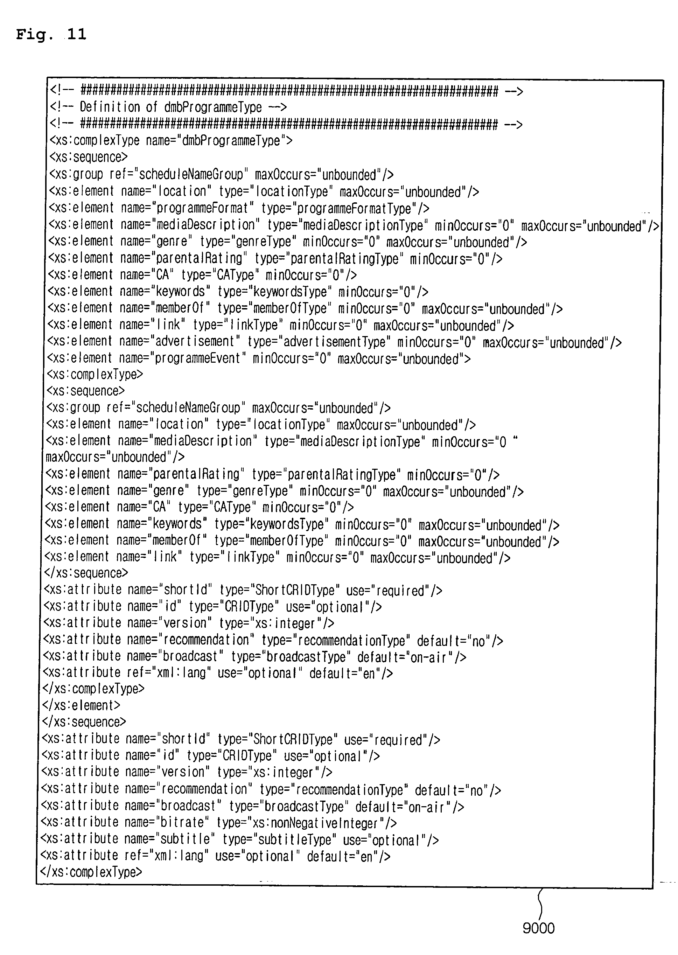

Fig. **11** is an example of <dmbProgrammeType>. Fig. **11** is an example of XML schema representing program information of a broadcasting system of the present invention.

Fig. **11** shows a <dmbProgrammeType> of a XML EPG, and the attributes such as <live>, <repeat>, <CastMember> are inserted in an Element.

Program information comprising cast, director, live, pre-recorded, present and re-broadcasting information can be effectively provided to the user according to a broadcasting system for providing program information, a broadcasting method for sending program information, a broadcasting method for receiving program information, a broadcasting apparatus for sending program information and a broadcasting apparatus for receiving program information.

As described-above embodiments, when EPG is provided in the digital multimedia broadcasting (DMB) system, cast, director, live, pre-recorded, present and re-broadcasting information can be easily provided according to the present invention.

It will now be appreciated that the present invention provides a broadcasting system for providing program information.

The foregoing is merely illustrative of the principles of this invention and various modifications can be made by those skilled in the art without departing from the scope and spirit of the invention.

## Claims

1. A broadcasting system for providing program information comprising:
a sender having an EPG data generating unit for generating an EPG data having at least cast and director information of the program, an encoding unit for encoding the EPG data and a sending unit for sending the encoded EPG data; and
a receiver having a receiving unit for receiving the encoded EPG data transferred from the sender, a decoding unit for decoding the encoded EPG data received from the receiving unit and an EPG data processing unit for extracting the cast and director information from the decoded EPG data.

2. The broadcasting system for providing program information according to Claim 1, wherein the EPG data providing cast and director information is represented as an extensible markup language (XML) schema.

3. The broadcasting system for providing program information according to Claim 1, wherein the EPG data is represented as XML, a <CastMember> is described in an element, and a <CastMemberType> and a <CastMemberName> are described in an attribute.

4. The broadcasting system for providing program information according to Claim 3, wherein the <CastMemberType> of the attribute represents a type of the cast and director information.

5. A broadcasting method for sending program information comprising:
generating an EPG data having at least cast and director information;
encoding the EPG data; and
sending the encoded EPG data.

6. The broadcasting method for sending program information according to Claim 5, wherein the EPG data providing cast and director information is represented as an extensible markup language (XML) schema.

7. The broadcasting method for sending program information according to Claim 5, wherein the EPG data is represented as XML, a <CastMember> is described in an element, and a <CastMemberType>and a <CastMemberName> are described in an attribute.

8. A broadcasting method for receiving program information comprising:
receiving an encoded EPG data having at lest cast and director information;
decoding the encoded EPG data; and
extracting the cast and director information from the decoded EPG data.

9. The broadcasting method for receiving program information according to Claim 8, wherein the EPG data providing cast and director information is represented as an extensible markup language (XML) schema.

10. The broadcasting method for receiving information according to Claim 8, wherein the EPG data is represented as XML, a <CastMember> is described in the element, and a <CastMemberType> and a <CastMemberName> are described in the attribute.

11. A broadcasting system for providing program information comprising:
a sender having an EPG data generating unit for generating an EPG data having at least one of live or pre-recorded information, and present broadcasting or re-broadcasting information, an encoding unit for encoding the EPG data and a sending unit for sending the encoded EPG data; and
a receiver having a receiving unit for sending the encoded EPG data transferred from the sender, a decoding unit for decoding the encoded EPG data received from the receiving unit and a EPG data processing unit for extracting at least one of live or pre-recorded information and present broadcasting or re-broadcasting information, from the decoded EPG data.

12. The broadcasting system for providing program information according to Claim 11, wherein the EPG data providing the information is represented as an extensible markup language (XML) schema.

13. The broadcasting system for providing program information according to Claim 12, wherein the information is described as an attribute of a <dmbProgramme> of an extensible markup language (XML) schema.

14. The broadcasting system for providing program information according to Claim 13, wherein the attribute is described as <liveType> if the information is live or pre-recorded information.

15. The broadcasting system for providing program information according to Claim 13, wherein the attribute is described as <repeatType> if the information is present or re-broadcasting information.

16. The broadcasting system for providing program information according to Claim 11, wherein the sender is a digital multimedia broadcasting (DMB) station, which sends digital multimedia broadcasting signal.

17. The broadcasting system for providing program information according to Claim 11, wherein the receiver is a digital multimedia broadcasting (DMB) mobile phone, which receives digital multimedia broadcasting signal.

18. The broadcasting system for providing program information according to Claim 11, wherein the EPG data providing live or pre-recorded information and/or present broadcasting or re-broadcasting information, is represented as an extensible markup language (XML) schema.

19. A broadcasting method for sending program information comprising:
generating an EPG data having at least one of live or pre-recorded information, and present broadcasting or re-broadcasting information;
encoding the EPG data; and
sending the encoded EPG data.

20. A broadcasting method for receiving program information comprising:
a receiving an encoded EPG data having at least one of live or pre-recorded information, and present broadcasting or re-broadcasting information;
decoding the encoded EPG data; and
extracting the information, which is at least one of live or pre-recorded information and present broadcasting or re-broadcasting information, from the decoded EPG data.
